# EUROPEAN PATENT APPLICATION

(11) **EP 3 933 598 A1**
(43) Date of publication of application: **05.01.2022**
(21) Application number: 20183244.1
(22) Date of filing: 30.06.2020
(51) Int. Cl.: G06F 11/36

(54) **MACHINE LEARNING PIPELINE**

(71) Applicant: Microsoft Technology Licensing, LLC, Redmond, WA 98052-6399 (US)
(72) Inventor: GRAYSON, Martin, Philip,, Redmond, Washington 98052-6399 (US); MORRISON, Cecily, Peregrine Borgatti, Redmond, Washington 98052-6399 (US); DUNPHY, Anja, Redmond, Washington 98052-6399 (US)
(74) Representative: Townsend, Martyn

(57) **Abstract**

A tool for probing a machine learning pipeline, wherein each pipeline stage performs a respective mapping of a respective input state to a respective output state, and each but the last provides its output state on to the input state to a respective successive stage in the pipeline. At least one pipeline stage has one or more adjustable parameters which affect the respective mapping. The tool comprises: a data interface for reading probed pipeline data from the pipeline, the probed data comprising at least some of the output state of at least one pipeline stage; and a user interface module configured to present information on the probed pipeline data to a user through a user interface, and to provide at least one user interface control enabling the user to adjust one or more parameters of at least one of the stages in the pipeline based on the presented information.

## Description

### Background

Continuous, complex artificial intelligence agents can be built from multiple machine learning models and other algorithms that form a pipeline, taking a sequence of input data and transforming it through each component, producing an output state from each component, and an eventual pipeline end state (the output of the pipeline as a whole). Such an agent may be referred to as continuous in that the input and output states can be continuously updated (this contrasts with decision-based systems where the algorithm has a single output). Further inputs will continue to update and change the output states of the successive components in the pipeline. The pipeline end state can be used by the agent to drive the processing in a system or an end user experience.

One example is a continuous agent that uses a camera to recognize and track people moving around in a space. There may be a component to detect whereabouts there are people in the images, a subsequent component that may identify the people when their faces are visible, and one further component that can track and predict their movements between camera frame inputs.

Each component in this pipeline may use a machine learning model, or an algorithm, to process the input and produce an output for the next component, or at the end of the pipeline, produce a state predicting where all tracked people may be located.

### Summary

Often a stage in such a pipeline will need to have one or parameters tuned, either during testing after an initial round of training of the pipeline, or later "in the field" after deployment of the pipeline in a real-life application. For instance, an example of such a parameter would be the average or maximum speed of a human as assumed by the tracking stage of a people detection pipeline. The model or algorithm used in the tracking stage may use this parameter to determine whether, or how likely it is that, an object detected by a preceding pipeline stage in one image is the same person as an object detected at a different point in another, later image (the parameter will determine whether it is possible, or how likely it is, that a person could have moved that far in the time between the capture of the two images). A higher value of this parameter will tend to mean more hits (i.e. more positive detections), some of which could be false positives; and vice versa a lower value will tend to mean fewer hits, some of which could be due to false negatives.

However, it can often be difficult to understand the relationship between the data at some point in the pipeline and a parameter of a stage in the pipeline either before or after that point. For instance, this can make it especially difficult for a user who is not an expert in programming or machine learning - such as a behavioural scientist - to participate in the development or testing of a machine learning pipeline.

According to one aspect disclosed herein, there is provided a system comprising: processing apparatus comprising one or more processing units; and memory comprising one or more memory units, wherein the memory stores software arranged to run on the processing apparatus, the software comprising a tool for probing a machine learning pipeline that comprises a series of pipeline stages from a first stage to a last stage, at least one of the series of pipeline stages comprising a machine learning model, wherein each pipeline stage performs a respective mapping of a respective input state to a respective output state, and each but the last stage provides its respective output state as at least part of the input state to a respective successive stage in the pipeline, and wherein at least one of the pipeline stages has one or more adjustable parameters which affect the respective mapping. The tool comprises: a data interface operable to read probed pipeline data from the pipeline, the probed pipeline data comprising at least some of the output state of at least one probed stage of the series of pipeline stages; and a user interface module configured to present information on the probed pipeline data to a user through a user interface, and to provide at least one user interface control enabling the user to adjust one or more of the parameters of at least one of the stages in the pipeline based on the presented information.

The disclosed tool advantageously presents the pipeline data to a user, e.g. a non technically-skilled user such as the behavioural scientist in the people tracking example, through a user interface in a human-readable form, and enables them to make judgements about how to tune a particular parameter of the pipeline in light of insights provided by the presented data.

For instance, it can often be difficult to determine the exact extent of the effect that tuning a particular parameter will have. E.g. in the people tracking example, the speed parameter should preferably be set to the right level such that neither an unrealistically high nor an unrealistically low number of hits tends to be detected for a given application. Further, in complex systems the nature of the effect could also be more difficult to predict, and there could even be a complex interdependency between the effects of different parameters, different pipeline stages, and/or different data points.

Therefore preferably, in embodiments, the user interface module is further configured so as, following the pipeline recomputing the output states based on said adjustment, to update the presented information data accordingly.

For example, the user input module may be further configured to provide a user interface control enabling the user to select the at least one probed stage from amongst the series of pipeline stages. In some such embodiments, the user interface controls may enable the user to adjust one or more parameters of one of the stages, and to select a preceding one of the series of pipeline stages as the probed pipeline stage such that the updated information presented in the user interface reflects an effect of the adjustment on the output state of the preceding pipeline stage.

As another example, the pipeline may be operable to process a series of data points, each data point being input in turn as the input state to the first stage and passed through the pipeline from the first stage through to the output state of the last stage; and the user interface module may enable the user to select from which point in the series to read the probed pipeline data and present the presented information. In some such embodiments, the user interface module may enable the user to perform the update based on being presented with the information for one selected data point in the series, and to navigate back and/or forth through the series of data points such that the updated information presented in the user interface reflects an effect of the adjustment on another of the data points.

Such embodiments advantageously enable the user to visualize or better comprehend the effect of tuning a particular parameter in a machine learning pipeline. For instance in the people tracking example, the user can compare the number of detected hits against his/her own human judgement, e.g. compared to a separate observation of the ground truth or an intuitive understanding of what number of hits is likely in the application in question. The user can then tune the speed parameter until the behaviour of the tracker stage roughly matches the user's expectation according to his/her judgement. The tool provides these kinds of insights in an intuitive, human interpretable form through a UI without the user needing to access the model at the programming level or even necessarily being an expert in machine learning per se.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

### Brief Description of the Drawings

To assist understanding of embodiments of the present disclosure and to show how such embodiments may be put into effect, reference is made, by way of example only, to the accompanying drawings in which:
Figure 1 is a schematic block diagram of an example system comprising a machine learning pipeline in accordance with embodiments disclosed herein,
Figure 2 is a schematic mock-up of a user interface in accordance with embodiments disclosed herein,
Figure 3 is a flow chart of an example method, and
Figure 4 is a schematic representation of a neural network showing variables and parameters of the network.

### Detailed Description of Embodiments

As mentioned, a continuous, complex artificial intelligence agent can be built from multiple models and/or other algorithms that form a pipeline, taking a sequence of input data and transforming it through each component, producing an output state from each component, and an eventual pipeline end state. Further inputs will continue to update and change the output states of subsequent components. The component output states or the pipeline end state can be used by the agent to drive the processing in a system or an end user experience. However, a user may wish to tune (i.e. adjust) one or more parameters of one or more stages in the pipeline.

Consider again the example of a continuous agent that uses a camera to recognise and track people moving around in a space. There may be a component to detect where there are people in the images, a subsequent component that may identify them when their faces are visible, and one further component that can track and predict their movements between camera frame inputs. Each component in this pipeline may use a machine learning model, or an algorithm, to process the input and produce an output for the next component, or at the end of the pipeline, produce a state predicting where all tracked people may be located. In such a scenario, a user such as a domain specialist may wish to improve the agent's overall ability to detect and track people in the camera images, which may require changing one or all of the components in the pipeline.

In embodiments of the presently disclosed approach, a user can observe changes in the output of at least one pipeline component with the corresponding pipeline input. In further embodiments the user can observe each component output state, and the pipeline end state, with each input from a sequence of inputs. The user has access to the parameters used by each component in the pipeline that produced the state for any given input at any given time. The parameters for a component are made available to the user in an interpretable way so that the user can easily determine, when reviewing the output state and pipeline end state, what effect changing the parameter may have.

Changing a parameter in a component allows the input state to be re-processed through the pipeline. The user may review the effect on the component output state, the subsequent component output states and the pipeline end state, observing desirable or undesirable consequences of the change.

The user may also navigate forwards and backwards through the sequence of inputs to observe the effect of any parameter changes, reviewing individual component outputs and/or the effect on the pipeline end state, at any given time.

The approach is particularly applicable when it makes good sense for a human to evaluate how correct or plausible the resultant states are - for example because the states are complex, or reflect something that is probabilistic or intuitive to human nature.

Based on this, users can thus determine desirable values of one or more parameters of a model used in a pipeline component, or determine bounds (thresholds) for parameters of a point in the sequence of inputs and then automate the experimentation of the parameter values. Where the correctness of component output states pipeline end states can be measured, the possible parameter values may be ranked for each input in the sequence of inputs.

This approach allows users, who may not be machine learning experts, but understand the agent experience, to be able to determine what a desirable component output state or pipeline end state is, to experiment and tune interpretable parameters for components, and to observe the resulting output states and pipeline end states for any input in the input sequence in an interactive environment.

As the approach is interactive, users can also quickly observe the effect that small and incremental changes to parameters have on the output states of components, and the pipeline end states for any of the inputs.

To improve the performance of continuous agents and any resulting user experiences, current approaches require expert machine learning engineers to either retrain models used by the components or to configure model settings that require a degree of expertise. Components may also need to be replaced, wholesale, or changes made to the pipeline input data. These approaches result in a long lead time before being able to observe how the changes effected the output and end states.

For a given sequence of inputs, the presently disclosed approach provides the ability to take an input and observe one or more output states for components in the pipeline. Each component may make available a set of parameters that should be interpretable to users who broadly understand the goals of the agent or the user experience, so that they can determine what parameter changes will move closer to desirable states.

In embodiments, when a user makes a change to the parameters, they can observe the effect on the component states and the pipeline end state for a selected input in the sequence. And/or, the user may also move forwards or backwards through inputs in the sequence to observe the effects on the states at different moments.

In some embodiments users can define the possible bounds that they believe parameter values should lie within, that contribute to desirable output states and pipeline end states. When the correctness of states can be measured, all possible parameter values can be evaluated allowing them to be ranked for any given input in the sequence of inputs.

Changing the parameters is an interactive experience with the components, their output states and the pipeline end state. When a change is made for a given input, the effects on the component output states and pipeline end state can be reviewed to determine whether the results are desirable. The user may also be able to move forwards or backwards though all inputs in the input sequence, to review the effects of the changes for any moment in the sequence.

In embodiments, the inputs and output state for each component in the pipeline, as well as the pipeline end state, may be observed by a user for every input in the input sequence. The sequence of inputs may also be easily navigated.

Preferably, each component can make available a set of parameters that should be understandable to a user who has broad familiarity to agent and/or the experience that the agent produces. The parameters do not require a programming expert, such as a machine learning engineer, to anticipate what effect changing the value may have.

In further embodiments, in particular when it makes sense for a human to define the like bounds of a parameter, all of their possible values may be processed for any given, or all, inputs and then ranked based on the correctness of the component state and pipeline end state allowing for the automated discovery of the best performing parameters for a given sequence of inputs.

The disclosed approach expands the tools and services available to customers that wish to implement artificial intelligence and machine learning systems in their own solutions. Customers developing continuous agents as a part of their systems conventionally require expert machine learning engineers to prototype, test, debug and improve these agents, making it difficult, or impossible, for other team members, especially those who may understand the end user experience of the agent to contribute to its improvement.

According to the approach disclosed herein on the other hand, these systems can instead be architected in such a way that any or each component in the pipeline can show its output for a given input, and in embodiments for every input in a sequence of inputs. Further, each component can make available a set of human interpretable parameters that can be configured to change the output. This opens up the experience of debugging and improving the continuous agents to all that have a broad understanding of its goals or the end user experience it should drive.

This can be particularly applicable in the creation of transparent machine learning systems that implement the responsible artificial intelligence lifecycle. Individual components can be debugged, as well as the entire system, to detect and fix cases of bias or dangerous errors, for example. The presently disclosed approach thus supports human and machine partnerships, and aids the industry in building responsible artificial intelligence systems, providing a tool that makes transparent the systems that developers and customers are building, and enabling people who are not necessarily programmers or machine learning experts to play a key part of the development process.

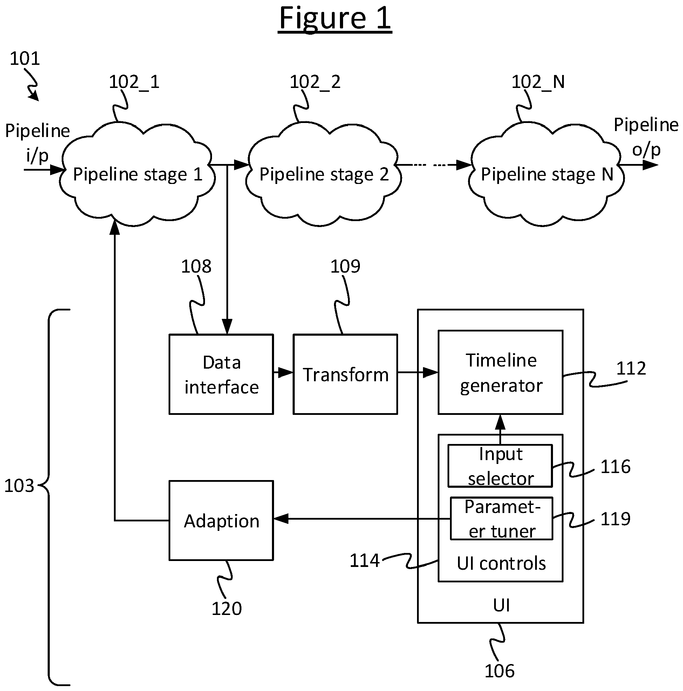

Figure 1 gives a schematic block diagram of a machine learning pipeline 101 and a software tool 103 in accordance with embodiments disclosed herein.

The machine learning pipeline 101 comprises a plurality of pipeline stages 102_n arranged in a pipeline, n = 1.... N. In other words the pipeline stages 102 are arranged in a sequence from first to last, wherein each but the last stage 102_N in the sequence receives an input from the output of the preceding stage 102_n-1 in the sequence, with the last stage 102_N providing the output of the pipeline as a whole. Each pipeline stage 102 receives a respective input state (input data) and processes this to produce a respective output state (output data). The input state of each successive stage 102_n in the sequence (n = 2...N) comprises at least part of the output state of the preceding stage 102_n-1. The first pipeline stage 102_1 receives as its input state the input of the pipeline as a whole (the pipeline input), and the output state of the last pipeline stage 102_N provides the output of the pipeline as a whole (the pipeline output).

The pipeline 101 is implemented in software. Each pipeline stage 102 comprises a module of code stored on computer readable storage (memory) and arranged to run on processing apparatus comprising one or more processing units. The memory may comprise one or more memory units such as a hard drive or external removable storage drive. The memory may employ one or more storage media, e.g. a magnetic medium such as a magnetic disk or tape, an electronic medium such DRAM, EEPROM or flash memory, or an optical medium such as an optical disk or quartz glass. The (or each) processing unit may take any suitable form such as a general purpose central processing unit (CPU), or an accelerator processor or other form of application specific processor such as a graphics processing unit (GPU), digital signal processor (DSP), crypto-processor, or machine learning accelerator processor. The memory and processing apparatus may be implemented on one or more computer devices, e.g. one or more servers implemented at one or more geographic sites; and/or one or more user devices such as a desktop or laptop computer, handheld computer device such as a tablet or smartphone, or a wearable device such as a headset or smart watch. The different pipeline stages 102, or parts of a given stage, may be stored in the same memory unit(s) as one another or different memory units on the same or different computer devices, and may be run on the same processing unit(s) or different processing units on the same or different computer devices. Where different stages, or parts of stage, are implemented in different devices, then suitable networking techniques for achieving this will be familiar to a person skilled in the art, such as by networking together devices via a wide area network such as the Internet or a mobile cellular telephone network, or a wired or wireless local networking technology such as a Wi-Fi, Bluetooth or Ethernet, etc.

At least one of the pipeline stages 102 comprises a machine learning model. A machine learning model is a statistical model that is trained based on observed training data in order to produce a desired or expected output state for a given input state. A machine learning model may for example comprise a neural network, or another form of Bayesian probability model, or a meta learning model or clustering algorithm. E.g. in a neural network, the model comprises a network (graph) of nodes each of parameterized by one or more weights, which are gradually adapted based on the training data until the output state of the graph best fits the training data for a given set of inputs states in the training data.

In some embodiments each of the pipeline stages 102 is a respective machine learning model. Alternatively however, one or some of the pipeline stages 102 could be other forms of algorithm, e.g. an analytical algorithm such as filter that can remove data from the input should it not meet a desired threshold.

The pipeline output from the last stage 102_N in the pipeline provides the output of the pipeline as a whole (i.e. at the end of the sequence), and this may be considered the primary function of the pipeline. In addition to this, the tool 103 is configured to probe data from somewhere mid pipeline (in addition to the processing performed by the pipeline 101 to produce the pipeline output, i.e. in addition to the primary function of the pipeline itself).

By way of example, the pipeline 101 may be a pipeline that is to be used in a people identification application or other image recognition application, such as in a headset to be worn by a visually impaired person, or a device that enables gesture control such as a games console or gaming peripheral. Recognition here may mean generally just recognizing the presence of a person or object, or identifying the person or object. The pipeline stages 102_1...102_N may for example comprises any one or more of: a stage that detects presence of people, a stage that detects bodies, a stage that detects faces, a stage that detects a bounding box around a person's body or face, a stage that identifies people, a stage that detects position and/or relative proportions of bones and/or joints, a stage that detects a pose of a person, and/or a stage that tracks the motion of a person. E.g. consider the headset device for the visually impaired person. In this case the pipeline input (input state to the first stage 102_1) comprises image data from one or more cameras. Stages 102_1...102_N-1 before the end of the pipeline 101 may comprise a stage which detects the presence of a person, a person's body, a person's face, or a bounding box around the detected person's body or face; and a subsequent stage which identifies the detected person from their body and/or face. In some cases another stage may track identified people from one image to the next. The final pipeline output (the output state of the last stage 102_N) may be a 2D or 3D map indicating the positions and identities or other properties of detected people in a region around the headset. This map may be played out audibly to the wearer through headphones or the like, e.g. by playing out the name of an identified person when the wearer directs his/her face toward that person.

It will be appreciated that this is just one example and many other applications of machine learning pipelines are possible. Note also that the pipeline 101 could be implemented in the same device as the application to which it is applied (e.g. in the headset, or in the games console or peripheral, etc.) or externally in one or more other devices (such as a server), or a combination. The same may be said of the tool 103, which may be used for offline analysis or in the live experience, or both.

Wherever implemented, the tool 103 comprises a data interface 108, optional data transform module 109, a user interface module 106, and a parameter adaptation module 120. The UI module 106 comprises a UI output module 112 and a UI input module 114. The UI output module 112 may for example comprise a timeline generator. The UI input module 114 comprises a parameter tuning control module 119, and may also comprise an input data selector 116.

Each of these elements 108, 109, 112, 114, 116, 119, 120 is implemented in software, as a module of code stored on computer readable storage (memory) and arranged to run on processing apparatus comprising one or more processing units. Again the memory may comprise one or more memory units of any suitable form such as a hard drive or external removable storage drive; and may employ one or more storage media, e.g. a magnetic medium such as a magnetic disk or tape, an electronic medium such DRAM, EEPROM or flash memory, or an optical medium such as an optical disk or quartz glass. Each processing unit may again also take any suitable form such as a CPU, GPU, DSP, crypto-processor, machine learning accelerator processor, or any other form of general purpose or application specific processor. The memory and processing apparatus may again be implemented on one or more computer devices, e.g. one or more servers implemented at one or more geographic sites; and/or one or more user devices such as a desktop or laptop computer, handheld computer device such as a tablet or smartphone, or a wearable device such as a headset or smart watch. The different modules 108-120, or parts of a given module, may be stored in the same memory unit(s) as one another or different memory units on the same or different computer devices, and may be run on the same processing unit(s) or different processing units on the same or different computer devices.

Also, part of all of the tool 103 may be implemented on the same memory and/or processing unit(s) as some or all of the pipeline 101 or on different memory and/or processing unit(s), or a combination of these approaches. In embodiments, part or all of the tool 103 may be implemented on the same computer device(s) as some or all of the pipeline 101 or on a different device or devices, or a combination of the same and different devices. Where different stages 102 and/or modules 104-120, or parts of a given module, are implemented in different devices, then suitable networking techniques will be familiar to a person skilled in the art, such as by networking together devices via a wide area network such as the Internet or a mobile cellular telephone network, or a wired or wireless local networking technology such as a Wi-Fi, Bluetooth or Ethernet, etc.

The data interface 108 is arranged to read at least part of the output state of one of the pipeline stages 102_1....102_N. This may comprise one of the pipeline stages 102_1...102_N-1 before the last stage 102_N (Figure 1 shows it connected to the output of the first stage 102_1 but this is just one example). In other words the data interface 108 receives pipeline data from somewhere along the pipeline, potentially including the possibility of part way along the pipeline. In embodiments the data interface 108 may be capable of receiving input state comprising data of a predetermined type in a predetermined format from a pipeline stage of any of a plurality of different pipelines, as long as that pipeline stage outputs data of the predetermined type in the relevant format. E.g. the data interface may comprise an application programming interface (API) that enables different developers to plug the feature extractor 103 into their own pipeline. In some cases the feature extractor 104 may have the ability to be plugged into the middle of one pipeline or the end of another. The predetermined data type could be, for example, people count data, person identification data or bounding box data, etc.; and the format may refer to the manner in which the data is formatted in the data stream or file, or the like, supplied to the data interface. In some embodiments the interface may even be standardized. However such interoperability is not essential to all possible embodiments, and it is not excluded that in other embodiments the interface 108 could instead be a bespoke interface to the relevant pipeline stage 102_n.

The data interface 108 forwards the pipeline data which it reads onward to the UI output module 112, either in raw form, or in embodiments via the data transform module 109 which transforms the data before output through the Ul. The data transform module is optional, but where used is arranged to process the data from the data interface 108 in order to make it more interpretable to a human. This may comprise processing such as reformatting, sorting and/or filtering or the like. In some embodiments the data transform module 109 comprises a feature derivation module configured to process the received data in order to extract a derived feature from the data. For instance in the people recognition example, the extracted feature could be a count of the number of detected people, or an estimated percentage confidence in the recognition (likelihood of being correct). This could be derived for example from a pipeline stage that detects presence, bodies, bounding boxes around bodies or faces, or skeletons or frames of people, or such like, but before the subsequent identification or spatial mapping performed by a subsequent stage. In some embodiments the data passed to the UI module 106 could comprise a mixture of raw and transformed data.

Whatever form it takes, the data received via the data interface 108, and optionally via the data transform module 109, provides information which is output to a user of the tool 103 through a presentation part of the UI provided by the UI output module 112. This enables the user to access (e.g. view) information about the output state of at least one of the pipeline stages 102_1...102_N.

The UI module 106 is configured to provide a user interface (UI) to a user of the tool 103 to enable both user inputs and user outputs. The UI may comprise a graphical user interface (GUI), and/or or an audio or tactile interface (such as for visually impaired users). Note that the user for the present purposes is a user of the tool 103, who is not necessarily the user of the end device or application (such as the headset). E.g. the user of the tool 103 may not be the same as the wearer of the headset or the gamer using the games console, etc. Nonetheless in one advantageous application the user does not have to be an expert programmer, and does not have to be one of the programmers who programmed the pipeline 101. For example the user could be a behavioural scientist or medical expert (e.g. doctor) involved in developing and/or training the pipeline 101, but not necessarily programming it. Note also that the user for the present purposes could be a single individual or a team of people, e.g. a team of behavioural scientists and/or doctors.

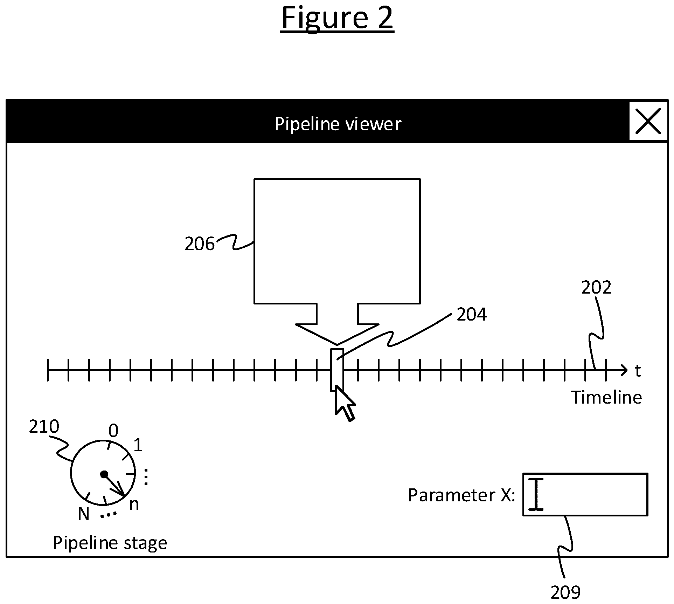

The UI output module 116 comprises a parameter tuning module 119, which provides a control which enables the user to adjust one or more parameters of one or more of the pipeline stages 102_1...102_N. A schematic mock-up of one possible example is shown in Figure 2, where the UI element labelled 206 represents the displayed information from the pipeline stage 102_n currently being probed, and the UI element labelled 209 represents an example of a UI control 109 for adjusting a parameter of one of the pipeline stages 102. The parameter being adjusted could be a parameter of the same pipeline stage 102_n whose output is being viewed, or a different stage. For example the UI control 209 could take the form of a text or number entry box, or a graphical dial or slider or the like, or a button for turning a parameter on and off, etc.

Because the parameter tuning control 209 is presented in the UI in conjunction with the information 206 taken from the output of one of the pipeline stages 102, then advantageously the user can make judgements about the parameter tuning in context of the insights provided by the probed pipeline data, which is provided to him/her in a user-accessible form through the Ul.

In embodiments, the UI input module 114 further comprises an input selector 116. This may be configured to provide a further UI control 210 enabling the user to select which of a plurality of the pipeline stages 102 to probe (i.e. from which to take the probed information 206). And/or, in embodiments the user may be able to view the information from multiple pipeline stages 102 at once. The control 210 may allow the user to select the outputs of multiple pipeline stages 102.

The pipeline selector control 210 may again take any suitable form, such as a text or number entry box, a dial, a slider, a switch, etc. It will be appreciated that the mock-up of Figure 2 is just by way of example.

In some embodiments, the input selector 116 may be configured to provide two different input controls (not shown) for independently selecting, on the one hand, the pipeline stage 102 whose output is being probed for information 206, and on the other hand, the pipeline stage 102 whose parameter(s) are being tuned by the tuning control 209. And/or, in embodiments the control 209 may enable the user to adjust multiple parameters of a given pipeline stage 102, or select which of multiple parameters to control.

In some embodiments the pipeline input may comprise a plurality of different data points, e.g. different images, files or data sets etc. In other words, each is a different value of the input feature vector. In such embodiments, the UI input module selector 116 may be configured to provide a control 204 enabling the user to select which input data point to extract the feature in association with.

In some exemplary applications, the pipeline input may comprise series data, such as time series data. In this case the pipeline input data comprises a series of data points, e.g. captured from different times. For instance the different data points could be different images, such as different frames of a video or different snapshots captured at different times. This would be the case for example in the headset application.

In embodiments, the UI output module 112 may comprise a timeline generator arranged to present the extracted feature to the user on a graphical timeline. This is illustrated schematically by way of example in the UI mock-up of Figure 2.

Here the UI comprises a timeline 202. The probed information 206 for the selected data point is displayed in association with the point on the timeline corresponding to the time of that data point, e.g. by means of an arrow or line connecting the displayed information 206 to the corresponding point on the timeline, and/or displaying a marker or slider 204 on the timeline at the relevant point. E.g. if the series data comprises frames or snaphots, the UI may show the relevant frame or snapshot as being connected to, pointing to or otherwise associated with the point on the timeline 202 corresponding to the time at which the frame or snapshot was captured.

In some such embodiments, the UI control provided by the input selector 116 may enable the user to navigate back and forth along the timeline. E.g. the UI control enabling selection of the input data may comprise a slider 204 which the user can slide along the timeline 202. This could be the same UI element as used as a marker to indicate the position on the timeline of the data point for which the information 206 is being displayed.

By means of UI control(s) 204 and/or 210 which enable the user to navigate back and forth between different points in the input data series, and/or to select between the outputs of different pipeline stages 102, this advantageously enables the user to identify an issue in the data at some point in the pipeline and/or series, and adjust one or more parameters accordingly, but then view an effect of that adjustment on some other point in the series or the output of some other stage in the pipeline 101. This may reveal that the adjustment is having a desired or undesired effect on other parts of the data and/or pipeline 101. For instance the user may gauge based on one view of the pipeline at one point in the time series that the stage in question is over or under detecting instances of people's bodies in a people recognition application. They may then make an adjustment to that stage in the pipeline based on this. However, the user may then view that this adjustment is having some other, undesired knock-on effect, e.g. the stage is now under or over detecting in a number of other points in the time series, and/or one or more other pipeline stages 102 such as a face detector, skeleton detector or motion tracker are now not behaving as expected.

The adaptation module 120 is configured to receive an indication of the parameter adjustment input by the user via the parameter tuner 119 of the UI input module 114, and to apply the adjustment to the relevant stage 102 in the pipeline 101 (e.g. a stage selected by the user via the UI input module 114). The parameter(s) to be tuned could be any parameter of a pipeline stage, whether it comprises a machine learning model or analytical algorithm.

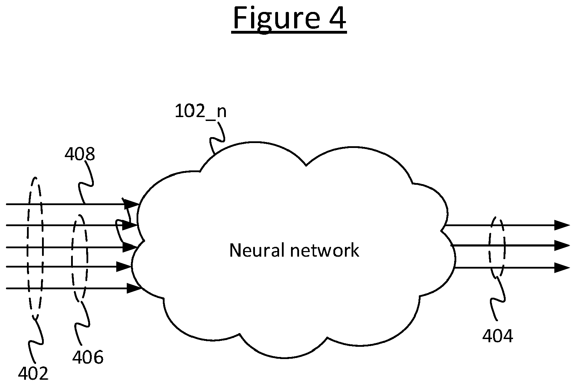

For instance in the case of a machine learning model such as a neural network (see Figure 4), the input state 402 may comprise a set of multiple constituent inputs, sometimes referred to as an input feature vector. E.g. in the case of an image the different constituent inputs (i.e. the different elements of the input feature vector 402) could comprise different pixel values, or at a later stage in the pipeline the input features could comprise, for example, the coordinates of bounding boxes around detected bodies or faces, or the coordinates and identities of detected people on 2D or 3D map, etc. Or to take another example, in a medial setting the input features could comprise survey data from a patient or other subject, and/or readings such as sensor measurements taken from the patient or subject. The output state 404 may comprise a single scalar output or an output vector, e.g. a vector representing predicted coordinates of detected boxes, people or objects, identities of predicted people; or a one-hot vector where each output element in the vector represents the probability of a different outcome (e.g. each representing a different condition of the patient or subject).

The input feature vector 402 comprises at least a subset of input elements 406 which are variables. I.e. the variables 406 are input elements which can change in value with each input data point in the training data used to train the neural network (or other such machine learning model). The input may also comprise one or more input elements 408 which are parameters. During an initial training round, the subset of variables 406 varies with each data point, but the one or more parameters 408 remain fixed. Then after the initial training round, using the disclosed tool, the user can adjust at least one of the one or more parameters 408, either by adjusting its value, or by turning on or off the parameter as an input 402 to the model. The adaptation module 120 then re-trains the model using the new value of the parameter 408 (and either the same set of training data for the variables 406 as the initial round or a new set of training data, or a combination). I.e. the model undergoes a second training round, during which again the subset of variables 406 varies with each input data point, but and the adjusted parameter 408 remains fixed at the new value (or is now turned on or off as an input at all).

In some embodiments, the parameter tuning control 209 is not just a single control but rather lets the user set upper and/or lower bounds for the parameter in question (i.e. a range). In this case the adaptation module 120 is configured to search for a value of the parameter within the range set by the user, by trialling different values within that range, e.g. to search for a value which optimizes an optimization function such as to minimize a measure or error in the output 404 of the model or algorithm of the pipeline stage 102 in question. In the case of a neural network or other machine learning model, the search may comprise re-training the neural network or model using training data with different values of the parameter included in the training data points, but only within the specified bounds, or it may comprise repeating the training of the network or model multiple times with different trial values of the parameter within the specified range.

Partially automating the adjustment may be advantageous in certain applications, because often the training does not work well if all input features 402 are allowed to vary across the whole range possible. This may require a large amount of processing resources. And/or, it may settle on solutions which are only local maxima or minima within the feature space but not the global optimum. By allowing the user to add some guidance to the search using his/her natural, human intuition as to what are plausible real-life values, then this can improve the search compared to performing an automated search across the whole range of possible values for the parameter(s) in question.

In some such embodiments, the adaptation module 120 may be further configured to rank a plurality of the different possible parameter values within the range set by the user, such as with a percentage confidence value or score, and provide these to the UI output module 112 to be presented to the user. It may do this for each of multiple the points of the data series, and/or multiple pipeline stages. Ranked here assumes there is some way to measure the success of this parameter against another parameter, e.g. a ground truth exists

There are a multitude of possible applications of the disclosed tool 103. As mentioned, one possible application is in relation to a headset for the visually impaired, where the input data to the first pipeline stage 102_1 comprises a series of captured images (e.g. frames or snapshots) and the output of the final stage 102_N is a 2D or 3D map of people indicating where recognized people are, played out audibly to wearer.

In another example application the pipeline 101 may be arranged as a pose detector, for instance for use in video game control. E.g. one stage 102 detects a box around each person detected in an image, then one or more further stages 102 detect position and/or relative proportions of bones, joints, head and/or face or the like; and the final stage 102_N outputs a detected pose.

Another example application is in healthcare where a machine learning pipeline 101 may be used to predict a trajectory of a condition of a patient or other subject. E.g. the condition may comprise anxiety or depression. In such applications, the input stage 102_1 may receive survey data and/or one or more measurements relating to the subject, and may predicts a score based on this. A subsequent stage 102 in the pipeline 101 may predict one or more future scores based on data of the subject and other subjects in the training data set.

In people detection applications such as the headset or pose detector, the parameter to be adjusted could be for example a threshold confidence value required to declare a positive detection at some stage 102_n in the pipeline (e.g. detection of a body, face, bone or joint). As another example, the parameter could comprise a number of hits required from a preceding stage 102_n-1.For instance the face detector or identity detector at one stage may be configured not attempt to perform its respective detection the body detector from a preceding stage to have detected a body in at least a threshold number of frames (e.g. three), and this threshold could be a tuneable parameter.

Another example of a parameter that may be trained is the average or maximum velocity of a person assumed by a motion tracker stage which follows one or more preceding people detection stages. The motion tracker may estimate which detection instances detected by one or more preceding stages over multiple frames are estimated to be the same person having moved between different points in the frame. The motion tracker may use an assumed average or maximum speed of a person as part of this estimate. If the motion tracker knows that the last time it saw a person was in a preceding frame, say 500ms ago for example, and it knows how far a person call likely move in that time, then the algorithm can estimate whether it is possible that an apparent instance of that person detected in a current frame is in fact the same person, or how likely that is. The speed used for this may be a tuneable parameter of the algorithm.

The user may use the tool 103 to determine, using his/her human judgement, whether the pipeline 101 is performing as expected, e.g. whether it is detecting too many or too few hits in a people or object detecting application, or whether it is predicting plausible or implausible outcomes in a healthcare application, etc. The user can then use the tool 103 to adjust one or more parameters of one or more of the pipeline stages 102, retrain the model if need be, and then potentially review the effect of the adjustment in order to determine whether it has improved or worsened the behaviour of the pipeline 101 overall.

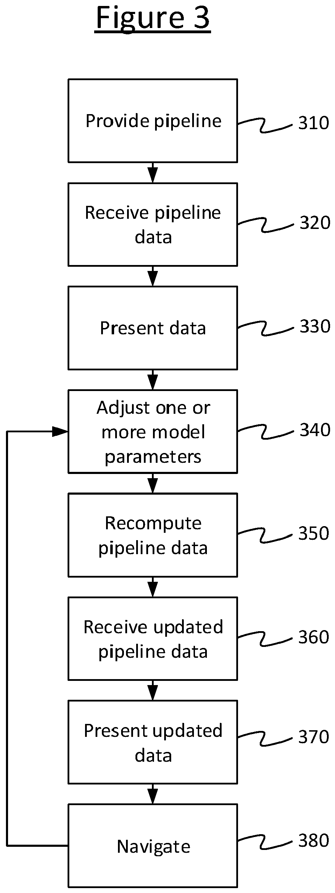

Figure 3 gives a flow chart outlining an example method in accordance with embodiments disclosed herein. Step 310 comprises providing the pipeline 101, by programming the pipeline 101 and training the machine learning stages 102 of the pipeline. This step is not required if the method begins by operating on a pre-existing pipeline 101. At step 320 the method comprises reading pipeline data from the output of at least one pipeline stage 102. At step 330 the method comprises presenting information on this data - either the raw data itself or a transformed thereof - to the user through a Ul, e.g. on a navigable timeline. At step 340 the user adjusts one or more parameters of one or more of the pipeline stages using a UI control of the Ul. Optionally the method continues to step 350 where it recomputes the pipeline data based on the adjustment. At step 360 the method then comprises reading out the updated version of the pipeline data, and at step 370 presenting information on this updated data to the user, e.g. again on the timeline. In embodiments, at step 380 the user may navigate back and forth along the timeline (or more generally through the time series data), and/or may select to view the output(s) of one or more other pipeline stages 102. Thus the user can view the effect of his/her adjustment on other points in the series and/or other stages in the pipeline.

It will be appreciated that the above embodiments have been described by way of example only.

More generally, according to one aspect disclosed herein, there is provided a system comprising: processing apparatus comprising one or more processing units; and memory comprising one or more memory units, wherein the memory stores software arranged to run on the processing apparatus, the software comprising a tool for probing a machine learning pipeline that comprises a series of pipeline stages from a first stage to a last stage, at least one of the series of pipeline stages comprising a machine learning model, wherein each pipeline stage performs a respective mapping of a respective input state to a respective output state, and each but the last stage provides its respective output state as at least part of the input state to a respective successive stage in the pipeline, and wherein at least one of the pipeline stages has one or more adjustable parameters which affect the respective mapping; the tool comprising: a data interface operable to read probed pipeline data from the pipeline, the probed pipeline data comprising at least some of the output state of at least one probed stage of the series of pipeline stages; and a user interface module configured to present information on the probed pipeline data to a user through a user interface, and to provide at least one user interface control enabling the user to adjust one or more of the parameters of at least one of the stages in the pipeline based on the presented information.

In embodiments, the user interface module may be further configured so as, following the pipeline recomputing the output states based on said adjustment, to update the presented information data accordingly.

In embodiments, the data interface may be operable to receive the pipeline data from at least one probed stage before the last stage.

In embodiments, the user input module may be further configured to provide a user interface control enabling the user to select the at least one probed stage from amongst the series of pipeline stages.

In embodiments, the user interface controls may enable the user to adjust one or more parameters of one of the stages, and to select a preceding one of the series of pipeline stages as the probed pipeline stage such that the updated information presented in the user interface reflects an effect of the adjustment on the output state of the preceding pipeline stage.

In embodiments, the pipeline may be operable to process a series of data points, each data point being input in turn as the input state to the first stage and passed through the pipeline from the first stage through to the output state of the last stage; wherein the user interface module enables the user to select from which point in the series to read the probed pipeline data and present the presented information.

In embodiments, the user interface module may enable the user to perform the update based on being presented with the information for one selected data point in the series, and to navigate back and/or forth through the series of data points such that the updated information presented in the user interface reflects an effect of the adjustment on another of the data points.

In embodiments the series may be a time series, the data points being associated with different respective times.

In embodiments, the user interface module may be configured to present an indication of the data points on a timeline at positions corresponding to the different respective times, and to provide a user interface control enabling the user to select the selected data point by navigating back and/or forth along the timeline.

In embodiments, the user interface may comprise a graphical user interface, the presented information being displayed on screen and the user control or controls comprising a graphical input mechanism.

In embodiments, the user interface module may be further configured to present a ground truth to the user in the user interface, thus enabling the user to make the adjustment further based on the presented ground truth, the ground truth comprising the input state of the first stage in the pipeline or a representation of a real-world state from which the input state of the first stage was captured.

In embodiments, the adjusting may comprise the user setting upper and/or lower bounds for at least one of said one or more parameters, and the tool further comprises an adaptation module configured to enact the adjustment of the at least one parameter by automatically searching for parameter values for said at least one parameter within the bound or bounds set by the user.

In embodiments, the adjusting may comprise the user setting a single specified value for at least one of the one or more parameters.

In embodiments, the machine learning model of at least one of the pipeline stages may comprise a neural network having been trained over at least a first training round, wherein the one or more parameters comprise a subset of inputs of an input vector of the neural network, the subset comprising one or some of the inputs of the input vector but not all; and the update may comprise re-training the neural network over a new training round wherein the one or more parameters of the neural network are fixed within each training round but are updated between the first and further training rounds.

In embodiments the adjusting may comprise: setting a value or range of values for at least one of the one or more of the inputs of the neural network, or turning on or off at least one of the one or more of inputs as inputs to the neural network.

In embodiments, the pipeline may be for use in a people recognition application, wherein the input state to the first stage comprises image data, and output state from the last stage comprises a 2D or 3D map of physical locations of the identified people.

According to another aspect disclosed herein, there may be provided a computer program product comprising the software of any embodiment disclosed herein, embodied on a computer-readable storage medium.

According to another aspect disclosed herein, there may be provided a computer-implemented method of performing additional processing on a machine learning pipeline that comprises a plurality of pipeline stages from a first stage to a last stage, at least one of the plurality of pipeline stages comprising a machine learning model, wherein each stage receives a respective input state and generates a respective output state based thereon, and each but the last stage provides its respective output state as at least part of the input state to a respective successive stage in the pipeline, the input state of the first stage acting as a pipeline input to the pipeline and the output state of the last stage providing a pipeline output of the pipeline; the method comprising: reading probed pipeline data from the pipeline, the probed pipeline data comprising at least some of the output state of at least one probed stage of the series of pipeline stages; presenting information on the probed pipeline data to a user through a user interface; and receiving a user input from the user to adjust one or more of the parameters of at least one of the stages in the pipeline based on the presented information.

In embodiments, the user may comprise at least one domain specialist who is not a programmer of the machine learning pipeline. For instance the domain specialist may be medical expert or a behavioural scientist.

Other variants or use cases of the disclosed techniques may become apparent to the person skilled in the art once given the disclosure herein. The scope of the disclosure is not limited by the described embodiments but only by the accompanying claims.

## Claims

1. A system comprising:
processing apparatus comprising one or more processing units; and
memory comprising one or more memory units, wherein the memory stores software arranged to run on the processing apparatus, the software comprising a tool for probing a machine learning pipeline that comprises a series of pipeline stages from a first stage to a last stage, at least one of the series of pipeline stages comprising a machine learning model, wherein each pipeline stage performs a respective mapping of a respective input state to a respective output state, and each but the last stage provides its respective output state as at least part of the input state to a respective successive stage in the pipeline, and wherein at least one of the pipeline stages has one or more adjustable parameters which affect the respective mapping; the tool comprising:
- a data interface operable to read probed pipeline data from the pipeline, the probed pipeline data comprising at least some of the output state of at least one probed stage of the series of pipeline stages; and
- a user interface module configured to present information on the probed pipeline data to a user through a user interface, and to provide at least one user interface control enabling the user to adjust one or more of the parameters of at least one of the stages in the pipeline based on the presented information.

2. The system of claim 1, wherein the user interface module is further configured so as, following the pipeline recomputing the output states based on said adjustment, to update the presented information data accordingly.

3. The system of claim 1 or 2, wherein the data interface is operable to receive the pipeline data from at least one probed stage before the last stage.

4. The system of any preceding claim, wherein the user input module is further configured to provide a user interface control enabling the user to select the at least one probed stage from amongst the series of pipeline stages.

5. The system of claim 4 as dependent on at least claim 2, wherein the user interface controls enable the user to adjust one or more parameters of one of the stages, and to select a preceding one of the series of pipeline stages as the probed pipeline stage such that the updated information presented in the user interface reflects an effect of the adjustment on the output state of the preceding pipeline stage.

6. The system of any preceding claim, wherein the pipeline is operable to process a series of data points, each data point being input in turn as the input state to the first stage and passed through the pipeline from the first stage through to the output state of the last stage; wherein the user interface module enables the user to select from which point in the series to read the probed pipeline data and present the presented information.

7. The system of claim 6 as dependent on at least claim 2, wherein the user interface module enables the user to perform the update based on being presented with the information for one selected data point in the series, and to navigate back and/or forth through the series of data points such that the updated information presented in the user interface reflects an effect of the adjustment on another of the data points.

8. The system of claim 6 or 7, wherein the series is a time series, the data points being associated with different respective times.

9. The system of claim 8, wherein the user interface module is configured to present an indication of the data points on a timeline at positions corresponding to the different respective times, and to provide a user interface control enabling the user to select the selected data point by navigating back and/or forth along the timeline.

10. The system of any preceding claim, wherein the user interface module is further configured to present a ground truth to the user in the user interface, thus enabling the user to make the adjustment further based on the presented ground truth, the ground truth comprising the input state of the first stage in the pipeline or a representation of a real-world state from which the input state of the first stage was captured.

11. The system of any preceding claim, wherein the adjusting comprises the user setting upper and/or lower bounds for at least one of said one or more parameters, and the tool further comprises an adaptation module configured to enact the adjustment of the at least one parameter by automatically searching for parameter values for said at least one parameter within the bound or bounds set by the user.

12. The system of any preceding claim, wherein the machine learning model of at least one of the pipeline stages comprises a neural network having been trained over at least a first training round, wherein the one or more parameters comprise a subset of inputs of an input vector of the neural network, the subset comprising one or some of the inputs of the input vector but not all; and wherein the update comprises re-training the neural network over a new training round wherein the one or more parameters of the neural network are fixed within each training round but are updated between the first and further training rounds.

13. The system of claim 12, wherein the adjusting comprises:
- setting a value or range of values for at least one of the one or more of the inputs of the neural network, or
- turning on or off at least one of the one or more of inputs as inputs to the neural network.

14. A computer program product comprising the software of any preceding claim embodied on a computer-readable storage medium.

15. A computer-implemented method of performing additional processing on a machine learning pipeline that comprises a plurality of pipeline stages from a first stage to a last stage, at least one of the plurality of pipeline stages comprising a machine learning model, wherein each stage receives a respective input state and generates a respective output state based thereon, and each but the last stage provides its respective output state as at least part of the input state to a respective successive stage in the pipeline, the input state of the first stage acting as a pipeline input to the pipeline and the output state of the last stage providing a pipeline output of the pipeline; the method comprising:
- reading probed pipeline data from the pipeline, the probed pipeline data comprising at least some of the output state of at least one probed stage of the series of pipeline stages;
- presenting information on the probed pipeline data to a user through a user interface; and
- receiving a user input from the user to adjust one or more of the parameters of at least one of the stages in the pipeline based on the presented information.
